# EUROPÄISCHE PATENTSCHRIFT

(11) **EP 0 633 176 B1**
(45) Veröffentlichungstag und Bekanntmachung des Hinweises auf die Patenterteilung: **27.05.1998**
(21) Anmeldenummer: 93117445.2
(22) Anmeldetag: 27.10.1993
(51) Int. Cl.: B62B 3/04

(54) **Transportsystem**
Transport system
Système de transport

(30) Priorität: 26.06.1993 DE 9309543 U
(43) Veröffentlichungstag der Anmeldung: 11.01.1995
(73) Patentinhaber: Still Wagner GmbH & Co. KG, 72760 Reutlingen (DE)
(72) Erfinder: Schadenberger, Martin, D-72555 Metzingen (DE); Meiser,Rudolf, D-72793 Pfullingen (DE)
(74) Vertreter: Kasseckert, Rainer

(56) Entgegenhaltungen:
- FR-A- 2 190 083
- FR-A- 2 546 498
- GB-A- 2 221 444
- US-A- 2 616 580
- US-A- 2 925 999

## Beschreibung

Die Erfindung betrifft ein Transportsystem mit einem Displaypaletten-Hubwagen, einem Rollcontainer und einer auf dem Rollcontainer befindlichen 1/4-Palette oder 1/2-Palette, wobei der Displaypaletten-Hubwagen einen im vorderen Bereich schwenkrollengestützten und im hinteren Bereich laufrollengestützten sowie höhenunveränderbaren Fahrzeugrahmen und einen relativ zum Fahrzeugrahmen höhenveränderbaren Lasttragteil mit zumindest zwei parallel zur Fahrzeuglängsachse ausgerichteten Lasttragelementen, sowie eine Hubeinrichtung zur Höhenveränderung des Lasttragteils und einen Lenkgriff zum Bewegen des Palettenhubwagens aufweist, und wobei der Fahrzeugrahmen ein endseitiges, U-förmiges Längsportal aufweist, dessen Portalbreite zumindest geringfügig größer als die Länge der 1/4- und/oder die Breite der 1/2-Palette ist.

Ein Hubwagen der genannten Art, bei dem die Breite des Fahrzeugsrahmens zur Anpassung an die Art der Last oder zur Erhöhung der Stabilität des Hubwagens verbreitert werden kann, ist aus der GB-A 2 221 444 bekannt. Ein handbetätigter Hubwagen des Standes der Technik mit starrem Fahrzeugrahmen ist beispielsweise durch die US 2 925 999 offenbart.

Da die Handhabung warenbestückter 1/1-Normpaletten, sog. Euro I-Paletten, einerseits entsprechend groß dimensionierte Gabelhubwagen mit einer, dem relativ hohen Nutzlastgewicht leistungsangepaßten Hydraulik voraussetzt und andererseits entsprechend breite Handhabungsfreiräume (Regal- bzw. Ladengassen) erfordert, die als Laden- bzw. Ausstellungsfläche verloren gehen, haben sich die großen Warendiscounter und der Lebensmitteleinzelhandel - vornehmlich die Einzelhandelsketten - in den vergangenen Jahren zunehmend auf Paletten mit kleineren Größenabmessungen umgestellt. Dabei haben sich insbesondere die sog. Displaypaletten durchgesetzt, auf denen die Waren und Stückgüter ohne das Erfordernis einer Zwischenkommissionierung oder Handumsetzung direkt im Laden bzw. Supermarkt ausgestellt und zum Verkauf feilgeboten werden. Hierdurch ergibt sich der Vorteil, dem jeweiligen spezifischen Ladenumsatz mengenangepaßte kleinere Warengebinde bzw. -kommissionen anbieten zu können.

Die beiden gängigsten Größen dieser Displaypaletten sind die genormten 1/2- und 1/4-Paletten, in Fachkreisen auch als Euro II- und Euro III-Paletten bekannt, wobei die 1/1-Normpalette zwei 1/2-Paletten und die 1/2-Palette zwei 1/4 Paletten tragen kann. Während die 1/2-Palette eine der 1/1-Paletten vergleichbare Bauweise mit jeweils zwei äußeren und einem mittigen Tragholm aufweist, stützt sich die 1/4-Palette mittels zweier äußerer gleichbreiter Eckständer in Längsrichtung wohl symmetrisch ab, bildet jedoch in Querrichtung einen unsymmetrischen Einschubraum, da ein Ständer nicht im äußeren Eckbereich, sondern stattdessen in einiger Entfernung vom Rand plaziert und außerdem breiter als der andere (Eck-)Ständer bemessen ist.

Dies birgt bei der Queraufnahme und beim nachfolgenden Transport einer 1/4-Palette aufgrund deren unsymmetrischen Aufnahmelage die Gefahr eines seitlichen Abkippens vom Lasttragteil bzw. dessen Lasttragelementen, die in Abhängigkeit von der Lasthöhe (Anzahl der aufgenommenen Paletten) sowie bei Kurvenfahrt steigt.

Um dies zu verhindern, sind bei einer aus dem DE-GM 92 11 190.4 bekannten Transportkarre mit T-förmigem Chassis in konstruktiv aufwendiger sowie bedienungsumständlicher Weise beidseitig zweier höhenveränderbarer Tragflächen (Lastgabeln) zur Kippsicherung der 1/4-Palette(n) zwei zusätzliche Arretierbügel vorgesehen, die bedarfsbezogen von einer Außerbetriebsstellung in ein Betriebsstellung verschwenkt werden müssen. Die Tragflächen dieser Transportkarre sind als nach unten offene, U-förmige Hohlprofile ausgebildet und müssen zum Zwecke der Palettenaufnahme haubenartig auf zwei deckungsgleich darunter angeordneten Längsträger des Chassis abgesenkt werden. Hierdurch ergibt sich der Nachteil, daß 1/2-Paletten, die ebenso wie die 1/4-Paletten in der Regel gemeinsam auf Rollcontainern angeliefert werden, wohl vom Rollcontainer aufgenommen bzw. abgehoben, jedoch nicht direkt auf dem Boden abgesetzt werden können, da die Breite der längsaufgenommen 1/2-Paletten größer ist als die lichte Weite zwischen den Tragflächen. Hierdurch ergibt sich das Erfordernis eines weiteren Umsetzungsvorganges und - will man physische Belastung durch menschliche Arbeitskraft ausschließen - ggf. der kostspielige Einsatz eines zusätzlichen Hubwagens größerer Bauart. Die Anordnung der vorderen Lenkrollen in etwa in einer Achse beidseitig der Hubeinrichtung beeinträchtigt die Standfestigkeit der Transportkarre und erhöht deren Kippneigung, ganz abgesehen von der durch die offenliegenden, ungeschützten Schwenkrollen hervorgerufenen Unfallgefahr.

Der Erfindung liegt deshalb die Aufgabe zugrunde, ein konstruktiv einfaches und kostengünstiges Transportsystem für Teilpaletten unterschiedlicher Größe - insbesondere auch für das Aufnehmen und Absetzen von 1/2-Paletten von Rollcontainern und Euro I-Paletten auf den Boden und umgekehrt unter engen Raumverhältnissen - zu schaffen. Der Hubwagen soll sich durch universelle Einsatzmöglichkeit, bedienungsfreundliche Handhabung, leichte Manovrierbarkeit und hohe Betriebssicherheit auszeichnen.

Diese Aufgabe wird erfindungsgemäß dadurch gelöst, daß die Portalbreite zumindest geringfügig größer ist als das Abstandsmaß zwischen den Außenkanten von Schwenkrollen des Rollcontainers in der Breite, und daß die Rahmenhöhe des Fahrzeugrahmens zumindest über dem Bereich des Längsportals geringfügig kleiner ist als der Abstand zwischen der Fahrbahnoberfläche und der Unterkante des Rollcontainers.

Die portalförmige Ausbildung ermöglicht eine vollkommen umstandslose Handhabung sämtlicher Lade- und/oder Transporthilfsmittel bis zu einer Größe der Portalbreite und verleiht dem Palettenhubwagen - bedingt durch die großen Radstände - außerdem ein hohes Maß an Standsicherheit, das hohe Transport- und insbesondere Kurvengeschwindigkeiten erlaubt, wobei sich durch die niedrige Bauhöhe des Rahmenportals auch leicht Rollcontainer o.ä. unterfahren lassen. Hierdurch eröffnet sich dem Benutzer ein vielseitiger Anwendungsbereich bei Einsatz geringsten Kraftaufwandes, was einer hohen Umschlagleistung zugute kommt.

In Weiterbildung des Erfindungsgedankens sind die Lasttragelemente zumindest auf das Höhenniveau des Fahrgestells absenkbar, was nicht nur die Aufnahme von Lade- und Transporthilfsmittel niedriger Bauhöhe sondern auch deren Absetzen auf Bodenniveau oder ggf. sogar geringfügig darunter erleichtert.

Gemäß einer vorteilhaften Ausgestaltung sind die Lasttragelemente am Lasttragteil quer zur Fahrzeuglängsachse unabhängig voneinander seitenverschiebbar und arretierbar, wodurch sich die Möglichkeit ergibt, den Abstand der Lasttragelemente sowohl den symmetrischen als auch unsymmetrischen Aufnahmeräumen (Einschuböffnungen) der unterschiedlichen Teilpaletten mühelos und ohne Zeitaufwand anzupassen, um dergestalt eine sichere Plattenfixierung auf den Lasttragelementen zu gewährleisten.

Hierzu dient auch das besondere Merkmal, gemäß dem die Lasttragelemente winkelförmig starr ausgebildet und an ihrem oberen Ende in einer am Lastträger fixierten Gabelträgerwelle horizontal verschiebbar gelagert sind, wobei am unteren Ende des vertikalen Winkelschenkels Arretierstifte befestigt sind, die mit korrespondierenden Rastbohrungen im Lastträger in Wirkverbindung stehen.

Eine kostensparende Bauweise zeichnet sich dadurch aus, daß der Fahrzeugrahmen aus zwei mit Abstand zueinander parallel zur Fahrzeugslängsachse angeordneten Tragarmen besteht, die einends von jeweils zumindest einer Laufrolle gestützt und andernends querverbunden sowie von zumindest einer Schwenkrolle gestützt sind, und daß mittig am Querträger eine Rollenführung fixiert ist, in der das Lasttragteil angeordnet ist.

Eine andere weiterbildende Maßnahme der Erfindung besteht darin, daß zwei vordere, beidseitige Schwenkrollen innerhalb eines vom Rahmen allseitig geschlossenen Rollenkastens angeordnet sind, wobei die Drehachse der Schwenkrollen mit relativem Abstand vor der Achse eines Hubzylinders der Hubeinrichtung angeordnet ist.

Weitere Vorteile ergeben sich aus der nachfolgenden Beschreibung sowie der schematischen Darstellung eines Ausführungsbeispieles anhand der Figuren. Es zeigt:
- **Fig. 1**: eine perspektivische Schemazeichnung des erfindungsgemäßen Displaypaletten-Hubwagens von vorne und
- **Fig. 2**: eine perspektivische Schemazeichnung des Displaypaletten-Hubwagens von hinten.

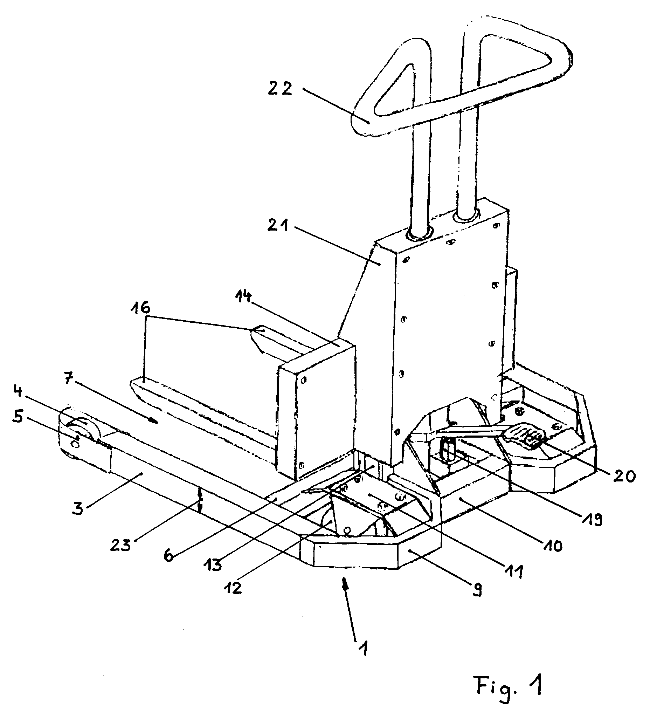

Wie in Fig. 1 aufgezeigt, weist der Displaypaletten-Hubwagen einen Fahrzeugrahmen 1 auf. Dieser besteht aus zwei parallel mit Abstand zueinander angeordneten Tragarmen 2 und 3. Diese werden an ihrem freien Ende von jeweils zumindest einer Laufrolle 4 getragen, die aus Sicherheitsgründen von einem Rollenschutz 5 umgeben ist. Anstelle einer Laufrolle 4 können alternativ auch mehrere Laufrollen 4 in Form von hinter- oder nebeneinander angeordneten Doppel- oder Zwillingsrollen vorgesehen werden, wobei es auch möglich ist, die Laufrollen 4 zum Ausgleich von Bodenunebenheiten in vertikaler Richtung zu verfedern.

Das vordere Ende der Tragarme 2 und 3 ist über einen Querträger 6 querverbunden, so daß die Tragarme 2 und 3 zum Fahrzeugende hin ein offenes U-förmiges Aufnahmeportal 7 bilden. Die Portalbreite (Innenbreite) 8 ist dabei geringfügig größer als die Länge einer 1/4- und/oder Breite einer 1/2-Palette. Die Bauhöhe des Fahrzeugrahmens 1 ist im hinteren Bereich über die gesamte Länge des Portals 7 geringfügig kleiner als das Abstandsmaß zwischen der Unterkante eines Rollcontainers und dem Boden, wodurch dieser leicht unterfahren werden kann.

Euro I-, II- und III-Paletten (1/1-, 1/2- und 1/4-Paletten) sowie Rollcontainer stellen allseits bekannten Stand der Technik dar, weshalb im weiteren Verlauf auf eine nähere Beschreibung und zeichnerische Darstellung dieser Ladehilfsmittel verzichtet wird.

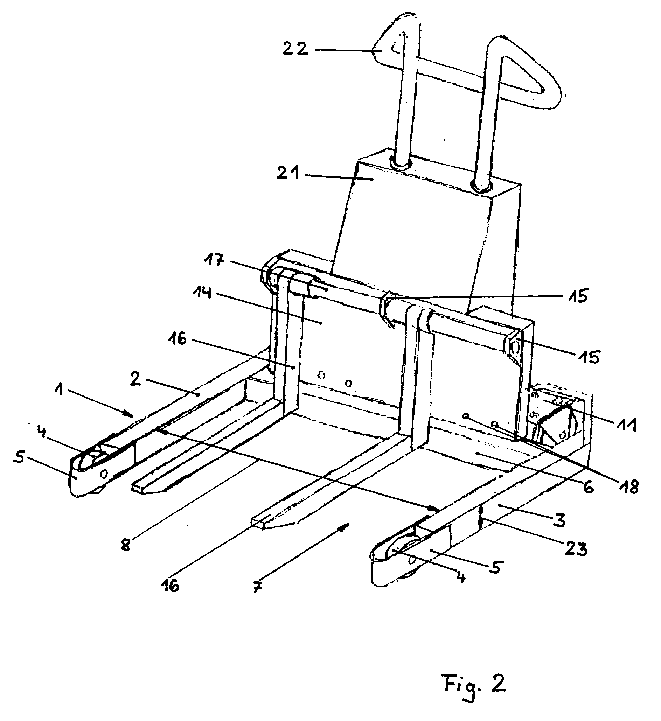

Gemäß Fig. 2 ist der Fahrzeugrahmen 1 am vorderen Fahrzeugende geschlossen, dergestalt, daß er beidseitig geschlossene Radkästen 9 bildet, zwischen denen eine kurze Quertraverse 10 angeordnet ist. Der dem Benutzer zugewandte vordere Bereich der Radkästen 9 kann mehreckig oder auch rund ausgebildet sein. Jeder Radkasten 9 weist in Fahrzeuglängsrichtung eine Radhalterung 11 auf, die einerseits am Querträger 6 und andererseits am vorderen Radkastenschutz befestigt, vorzugsweise angeschweißt ist. Die Radhalterung 11 ist mit zumindest einer Schwenkrolle 12 bestückt, so daß sich im dargestellten Ausführungsbeispiel eine Anordnung mit zwei seitlichen Schwenkrollen ergibt. Alternativ hierzu ist es denkbar, nur eine einzelne, mittig angeordnete Schwenkrolle am vorderen Ende des Displaypaletten-Hubwagens vorzusehen.

Mittig des Querträgers 6 ist eine beidseitig wirkende Rollenführung 13 fixiert, die in Fig. 2 nur auszugsweise angedeutet ist. In der Rollenführung 13 ist ein Lasttragteil 14 höhenveränderbar geführt, wobei auch andere mechanische Führungsmittel verschiedenster Bauart im Rahmen der Erfindung liegen. Am oberen Ende des Lasttragteils 14 sind zumindest beidseitig, ggf. auch zusätzlich mittig, Wellenhalter 15 befestigt, in denen eine Gabelträgerwelle 17 angeordnet ist. Auf dieser sind zwei Lasttragelemente 16 seitenverschiebbar gelagert, die als einstückige rechtwinklige Gabelzinken ausgebildet sind. Die Lasttragelemente 16 können auf mechanische, elektromechanische oder elektrische Art am Lasttragteil 14 und/oder an der Gabelträgerwelle 17 arretiert werden. Im Ausführungsbeispiel sind hierzu im unteren Bereich auf der Rückseite der vertikalen Winkelschenkel der Lasttragelemente 16 in besonders einfacher und kostengünstiger Weise nicht näher dargestellte Arretierstifte fixiert, die mit korrespondierenden Rastbohrungen 18 zusammenwirken, welche in die dem Portal 7 zugewandte Seite des Lasttragteils 14 eingelassen sind.

Zur Seitenverschiebung bzw. Abstandseinstellung der Lasttragelemente 16 auf die unterschiedlichen, teils symmetrischen, teils unsymmetrischen Aufnahmeräume der verschiedenen Paletten müssen die Lasttragelemente 16 an den vorderen, waagrechten Gabelenden nur geringfügig angehoben werden, wodurch sich die vertikalen Winkelschenkel auf der Gabelträgerwelle 17 drehen und die Arretierstifte aus den Rastbohrungen 18 freikommen. Das bzw. die Lasttragelemente 16 können nun um das gewünschte Maß seitenverschoben werden, wobei den einzelnen Palettenarten bzw. -breiten zugeordnete Kennmarkierungen in Form von Farbmalen, Anschlägen o.ä. dem Benutzer sehr hilfreich sind. Diese nicht näher dargestellten Kennmarkierungen finden sich auf dem Lasttragteil 14 und/oder der Gabelträgerwelle 17 und können in die Oberfläche eingelassen, mit derselben bündig oder erhaben ausgebildet sein. Hierzu reicht es beispielsweise auch, die ohnehin vorhandenen Rastbohrungen 18 im Lasttragteil 14 unterschiedlich farbig zu kennzeichnen bzw. mit einem Farbring zu umgeben, wobei eine bestimmte Farbe jeweils einer bestimmten Paletten(größe) zugeordnet ist. Nach der Seitenverschiebung der Lastträger um bzw. auf das gewünschte Maß werden die Arretierstifte der vertikalen Winkelschenkel der Lasttragelemente 16 wieder in die Rastbohrungen 18 eingerastet.

Zwischen dem Querträger 6 und der Quertraverse 10 ist eine Hubeinrichtung 19 bekannter und deshalb nur schematisch angedeuteter und nicht näher beschriebener Bauart angeordnet, die über einen Fußhebel 20 betätigbar ist. Mittels dieser Hubeinrichtung 19 kann das Lasttragteil 14 zusammen mit den Lastträgern 16 höhenverändert werden. Hubeinrichtung 19 und Rollenführungen 13 sind aus Sicherheitsgründen mit einer Schutzverkleidung 21 versehen.

An den Rollenführungen 13 oder einer oberen Querverbindung derselben ist ein vertikal nach oben ragender Lenkgriff 22 zum Lenken, Schieben und Ziehen des Displaypaletten-Hubwagens befestigt. Der Lenkgriff 22 ist in besonderer Weise ergonomisch ausgestaltet, wobei dessen oberes Ende einerseits beidseitig von der Mittelvertikalen weg zu den Fahrzeugaußenseiten und andererseits zum Benutzer hin nach unten abgewinkelt ist. Durch diese spezielle Ausbildung ist stets ein ausreichender Sicherheitsabstand zwischen Benutzer und Fahrzeug selbst beim Ziehen desselben vorhanden, der jegliche Berührung zwischen diesen vereitelt.

Die Erfindung ist natürlich keinesfalls auf die zuvor beschriebene und in den Fig. dargestellte Ausführungsform beschränkt. Es versteht sich von selbst, daß zahlreiche konstruktive und bauliche Änderungen sowie der Einsatz wirkungsäquivalenter Stell- und Hubmittel ebenso im Rahmen der Erfindung liegen wie die Verwendung andersartiger funktionserfüllender Rahmenbauteile, sofern grundlegende Bauform und Funktion des Displaypaletten-Hubwagens gewahrt bleiben. So ist es beispielsweise denkbar, anstelle der hydraulischen Hubeinrichtung 19 eine kostensenkende, rein mechanisch wirkende Hubeinrichtung zu verwenden, an beliebiger Stelle des Fahrzeugrahmens 1 oder des Lastträgers 14 zusätzlich beidseitig wirkende Hilfsmittel in Form palettenfixierender Arretierbügel anzuordnen, die von einer Außerbetriebsstellung in eine Betriebsstellung verschwenkt, gedreht oder geklappt werden können, die Seitenverschiebung bzw. Abstandseinstellung der Lasttragelemente 16 durch den Einsatz entsprechender Hilfsmittel zu unterstützen bzw. zu (teil)automatisieren oder die Absenkbewegung der Lasttragelemente 16 mittels Federkraft zu unterstützen.

### Teileliste

- 1.: Fahrzeugrahmen
- 2.: Tragarm
- 3.: Tragarm
- 4.: Laufrolle
- 5.: Rollenschutz
- 6.: Querträger
- 7.: Aufnahmeportal
- 8.: Portalbreite
- 9.: Radkasten
- 10.: Quertraverse
- 11.: Radhalterung
- 12.: Schwenkrolle
- 13.: Rollenführung
- 14.: Lasttragteil
- 15.: Wellenhalter
- 16.: Lasttragelement
- 17.: Gabelträgerwelle
- 18.: Rastbohrung
- 19.: Hubeinrichtung
- 20.: Fußhebel
- 21.: Schutzverkleidung
- 22.: Lenkgriff
- 23.: Rahmenhöhe

## Patentansprüche

1. Transportsystem mit einem Displaypaletten-Hubwagen, einem Rollcontainer und einer auf dem Rollcontainer befindlichen 1/4-Palette oder 1/2-Palette, wobei der Displaypaletten-Hubwagen einen im vorderen Bereich schwenkrollengestützten und im hinteren Bereich laufrollengestützten sowie höhenunveränderbaren Fahrzeugrahmen (1) und einen relativ zum Fahrzeugrahmen (1) höhenveränderbaren Lasttragteil (14) mit zumindest zwei parallel zur Fahrzeuglängsachse ausgerichteten Lasttragelementen, sowie eine Hubeinrichtung (19) zur Höhenveränderung des Lasttragteils (14) und einen Lenkgriff (22) zum Bewegen des Palettenhubwagens aufweist, und wobei der Fahrzeugrahmen (1) ein endseitiges, U-förmiges Längsportal (7) aufweist, dessen Portalbreite (8) zumindest geringfügig größer als die Länge der 1/4- und/oder die Breite der 1/2-Palette ist, **dadurch gekennzeichnet**, daß die Portalbreite zumindest geringfügig größer ist als das Abstandsmaß zwischen den Außenkanten von Schwenkrollen (12) des Rollcontainers in der Breite, und daß die Rahmenhöhe (23) des Fahrzeugrahmens (1) zumindest über dem Bereich des Längsportals (7) geringfügig kleiner ist als der Abstand zwischen der Fahrbahnoberfläche und der Unterkante des Rollcontainers.

2. Transportsystem nach Anspruch 1, dadurch gekennzeichnet, daß die Lasttragelemente (16) zumindest auf das Höhenniveau des Fahrgestells (1) absenkbar sind.

3. Transportsystem nach Anspruch 1 oder 2, dadurch gekennzeichnet, daß die Lasttragelemente (16) am Lasttragteil (14) quer zur Fahrzeuglängsachse unabhängig voneinander seitenverschiebbar und arretierbar sind.

4. Transportsystem nach einem der Ansprüche 1 bis 3, dadurch gekennzeichnet, daß die Lasttragelemente (16) rechtwinklig starr ausgebildet und an ihrem oberen Ende in einer am Lastträger (14) fixierten Gabelträgerwelle (17) horizontal verschiebbar gelagert sind, wobei im unteren Bereich des vertikalen Winkelschenkels der Lastträgerelemente (16) Arretierstifte befestigt sind, die mit korrespondierenden Rastborhrungen (18) im Lastträger (14) in Wirkverbindung stehen.

5. Transportsystem nach einem der Ansprüche 1 bis 4, dadurch gekennzeichnet, daß der Fahrzeugrahmen (1) aus zwei mit Abstand zueinander parallel zur Fahrzeuglängsachse angeordneten Tragarmen (2, 3) besteht, die einends von jeweils zumindest einer Laufrolle (4) gestützt und andernends querverbunden sowie von zumindest einer Schwenkrolle (12) gestützt sind, und daß mittig am Querträger (6) eine Rollenführung (13) fixiert ist, in der das Lasttragteil (14) höhenveränderbar angeordnet ist.

6. Transportsystem nach einem der Ansprüche 1 bis 5, dadurch gekennzeichnet, daß zwei vordere, beidseitige Schwenkrollen (12) innerhalb eines vom Fahrzeugrahmen (1) allseitig geschlossenen Radkasten (9) angeordnet sind, wobei die Drehachsen der Schwenkrollen (12) mit relativem Abstand vor der Achse eines Hubzylinders der Hubeinrichtung (19) angeordnet sind.

7. Transportsystem nach einem der Ansprüche 1 bis 6, dadurch gekennzeichnet, daß direkt oder indirekt mit dem Querträger (6) ein Lenkgriff (22) verbunden ist, dessen oberes Ende einerseits beidseitig von der Mittelvertikalen weg zu den Fahrzeugaußenseiten und andererseits zum Benutzer hin nach unten abgewinkelt ist.

## Claims

1. Transporting system having a display-pallet lifting truck, a rolling container and a 1/4-pallet or 1/2-pallet located on the rolling container, it being the case that the display-pallet lifting truck has a vehicle frame (1), which is supported by castors in the front region and by running rollers in the rear region and cannot be changed in height, and a load-bearing part (14), which can be changed in height relative to the vehicle frame (1) and has at least two load-bearing elements aligned parallel to the longitudinal axis of the vehicle, as well as a lifting device (19), for changing the height of the load-bearing part (14), and a steering-handle (22) for removing the pallet lifting truck, and it being the case that the vehicle frame (1) has an end-side, U-shaped longitudinal portal (7) whose width (8) is at least slightly greater than the length of the 1/4-pallet and/or than the width of the 1/2-pallet, characterized in that the portal width is at least slightly greater than the distance widthwise between the outer edges of castors (12) of the rolling container, and in that the height (23) of the vehicle frame (1) at least over the region of the longitudinal portal (7) is slightly smaller than the distance between the surface of the carriageway and the bottom edge of the rolling container.

2. Transporting system according to Claim 1, characterized in that the load-bearing elements (16) can be lowered at least to the level of the vehicle frame (1).

3. Transporting system according to Claim 1 or 2, characterized in that the load-bearing elements (16) on the load-bearing part (14) can be displaced laterally, and arrested, independently of one another in the direction transverse to the longitudinal axis of the vehicle.

4. Transporting system according to one of Claims 1 to 3, characterized in that the load-bearing elements (16) are designed rigidly at right angles and, at their top end, are mounted such that they can be displaced horizontally in a fork carrier shaft (17) fixed on the load-bearing part (14), arresting pins being fastened in the bottom region of the vertical angle leg of the load-bearing elements (16) and being in operative connection with corresponding latching bores (18) in the load-bearing part (14).

5. Transporting system according to one of Claims 1 to 4, characterized in that the vehicle frame (1) comprises two carrying arms (2, 3) which are spaced apart from one another parallel to the longitudinal axis of the vehicle and, at one end, are supported by in each case at least one running roller (4) and, at the other end, are connected transversely and supported by at least one castor (12), and in that a roller guide (13), in which the load-bearing part (14) is arranged such that it can be changed in height, is fixed centrally on the transverse carrier (6).

6. Transporting system according to one of Claims 1 to 5, characterized in that two front castors (12), on both sides, are arranged within a wheel housing (9) which is closed on all sides by the vehicle frame (1), the axes of rotation of the castors (12) being arranged at a distance in front of the axis of a lifting cylinder of the lifting device (19).

7. Transporting system according to one of Claims 1 to 6, characterized in that a steering handle (22) is connected directly or indirectly to the transverse carrier (6), and its top end, on the one hand, is angled away from the centre vertical on both sides to the outsides of the vehicle and, on the other hand, is angled downwards towards the user.

## Revendications

1. Système de transport avec un chariot élévateur de palettes de présentation, un conteneur roulant et une palette 1/4 ou une palette 1/2 se trouvant sur le conteneur roulant, dans lequel le chariot élévateur de palettes de présentation présente un châssis de véhicule (1) supporté dans sa région avant sur des galets pivotants et dans sa région arrière sur des galets de roulement, et qui n'est pas réglable en hauteur, et une partie de port de charges (14) réglable en hauteur par rapport au châssis de véhicule (1) avec au moins deux éléments de port de charges orientés parallèlement à l'axe longitudinal du véhicule, ainsi qu'un dispositif de levage (19) pour le réglage en hauteur de la partie de port de charges (14) et une poignée de direction (22) pour déplacer la transpalette, et dans lequel le châssis de véhicule (1) présente un portique longitudinal (7) en forme de U du côté de l'extrémité, dont la largeur de portique (8) est au moins légèrement plus grande que la longueur de la palette 1/4 ou que la largueur de la palette 1/2, caractérisé en ce que la largeur de portique est au moins légèrement plus grande que la dimension en largeur de la distance entre les arêtes externes de galets pivotants (12) du conteneur roulant, et en ce que la hauteur de châssis (23) du châssis de véhicule (1), au moins sur la région du portique longitudinal (7), est légèrement plus petite que la distance entre la surface du chemin de roulement et l'arête inférieure du conteneur roulant.

2. Système de transport suivant la revendication 1, caractérisé en ce que les éléments de port de charges (16) peuvent être abaissés au moins au niveau de hauteur du châssis (1).

3. Système de transport suivant la revendication 1 ou 2, caractérisé en ce que les éléments de port de charges (16) peuvent, sur la partie de port de charges (14), être déplacés latéralement et arrêtés, indépendamment l'un de l'autre, transversalement à l'axe longitudinal du véhicule.

4. Système de transport suivant l'une quelconque des revendications 1 à 3, caractérisé en ce que les éléments de port de charges (16) ont une configuration rigide perpendiculaire et sont supportés, à leur extrémité supérieure, de façon déplaçable horizontalement dans un axe de porte-équipements (17) fixé au support de charges (14), dans lequel des barres d'arrêt, qui sont en liaison active avec des trous de calage correspondants (18) dans le support de charges (14), sont fixées dans la région inférieure de la branche verticale des éléments de port de charges (16).

5. Système de transport suivant l'une quelconque des revendications 1 à 4, caractérisé en ce que le châssis de véhicule (1) se compose de deux bras porteurs (2, 3) disposés à distance l'un de l'autre parallèlement à l'axe longitudinal du véhicule qui, à une extrémité, sont supportés par au moins un galet de roulement (4) et, a l'autre extrémité, sont reliés transversalement et sont supportés par au moins un galet pivotant (12), et en ce qu'un guidage de galet (13), dans lequel la partie de port de charges (14) est disposée de façon réglable en hauteur, est disposé au milieu sur la poutre transversale (6).

6. Système de transport suivant l'une quelconque des revendications 1 à 5, caractérisé en ce que deux galets pivotants antérieurs (12) sont disposés sur les deux côtés, à l'intérieur d'un cadre de roue (9) fermé de tous côtés par le châssis de véhicule (1), dans lequel les axes de rotation des galets pivotants (12) sont disposés avec une distance relative en avant de l'axe d'un vérin de levage du dispositif de levage (19).

7. Système de transport suivant l'une quelconque des revendications 1 à 6, caractérisé en ce qu'à la poutre transversale (6) est reliée, directement ou indirectement, une poignée de direction (22), dont l'extrémité supérieure est coudée d'une part sur les deux côtés à partir de la verticale centrale vers les côtés extérieurs du véhicule et d'autre part vers le bas dans la direction de l'utilisateur.
